# EUROPEAN PATENT SPECIFICATION

(11) **EP 2 121 861 B1**
(45) Date of publication and mention of the grant of the patent: **21.07.2010**
(21) Application number: 07700523.9
(22) Date of filing: 17.01.2007
(51) Int. Cl.: C09J 5/04, C09J 5/06, C09J 163/00

(54) **LOW TEMPERATURE CURING OF TOUGHENED EPOXY ADHESIVES**
NIEDERTEMPERATURHÄRTUNG VON SCHLAGZÄH MODIFIZIERTEN EPOXIDKLEBSTOFFEN
DURCISSEMENT À BASSE TEMPÉRATURE D'ADHÉSIFS ÉPOXYDES RENFORCÉS

(43) Date of publication of application: 25.11.2009
(73) Proprietor: Hexcel Composites, Ltd., Duxford Cambridge CB2 4QD (GB)
(72) Inventor: ASPIN, Ian, Cambs SG8 7RX (GB)
(74) Representative: Sarlin, Laure V.
(86) International application number: PCT/IB2007/000190
(87) International publication number: WO 2008/087467

(56) References cited:
- EP-A1- 1 431 365
- DE-A1- 10 017 784
- US-A1- 2003 187 154
- DATABASE WPI Week 199619 Derwent Publications Ltd., London, GB; AN 1996-183176 XP002435588 & JP 08 057709 A (TOSHIBA TUNGALLOY KK) 5 March 1996 (1996-03-05)

## Description

### BACKGROUND OF THE INVENTION

### 1. Field of the Invention

The present invention relates generally to the use of thermoplastic materials for toughening thermosetting resins for use as adhesives. More particularly, the present invention is directed to improving the peel strengths of such thermosetting adhesives, even when the adhesives are subjected to relatively low curing temperatures.

### 2. Description of Related Art

Epoxy resins have been widely used as a major ingredient in thermosetting resin adhesives. A popular strategy for increasing the bonding strength of epoxy-based adhesives is to dissolve thermoplastics in the epoxy resin prior to curing. Such thermoplastic-loaded epoxy resins become "toughened" during the cure cycle. The resulting toughened epoxy adhesives typically exhibit higher bond strengths (i.e. increased peel strengths).

Thermoplastic loaded thermosetting (epoxy) adhesives (and other matrices) require sufficient time and temperature during the cure cycle to allow the appropriate phase morphology to develop in order to effect toughening of the epoxy thermoset by reaction-induced phase separation or precipitation of the thermoplastic as particles. In order to optimize the general usefulness of the epoxy adhesive, it is considered desirable to keep the cure temperatures and cycle times at a minimum. However, if the cure temperature or time is insufficient, then the toughening tends to be far from optimum, which is often demonstrated as a reduction in the peel strength of the adhesive.
For instance, EP 1431365 discloses a heat and impact resistant adhesive which can include at least one acrylic-based monomer, at least epoxy based monomer/resin, at least one bifunctional monomer chemically reactive with the acrylic-based monomer and the epoxy based monomer/resin, at least one impact modifier, and a catalyst system. DE 10017784 (A1) is related to a thermally curable epoxy resin composition contains a reaction product prepared from a difunctional amine terminated polymer and a tri- or tetracarboxylic acid anhydride characterized by having more than one imide and carboxyl group per molecule, a copolymer and a latent hardener.

One approach to keeping cure temperatures as low as possible without decreasing resin toughening is to use thermoplastic materials that do not precipitate during cure. These thermoplastics, such as phenoxy resins, have been used effectively to toughen epoxy adhesives when relatively low temperature curing is desired. However, these types of thermoplastic materials tend to have lower softening or glass transition temperatures (T_{g}), which make the resulting adhesives unsuitable for use at elevated temperatures.

Another common strategy for instance described in US 2003 187 154 used by many adhesive film manufacturers to improve peel strength, while keeping cure temperatures low, is to make use of liquid rubber polymers, either adducted with epoxy resins or as neat liquids. These liquid rubber polymers, such as carboxyl-terminated butadiene-acrylonitrile copolymer rubber (CTBN), are mixed in with the other adhesive ingredients during resin blending. The CTBN remains dissolved in the resin during cure or it may precipitate to varying degrees to form rubber particles. It is usually found that such a method can be used over a wide range of curing temperatures without affecting the overall peel strength. However, the use of these rubber polymer materials also limits the maximum operating temperature of the adhesive because the dissolved rubber tends to cause some plasticization and lowering of the glass transition temperature of the adhesive.

In another approach, core/shell particles are used as the sole toughening agent for the epoxy adhesive. Fine particles that are commonly referred to as "core/shell" particles due to their structure, have been used as an additive in epoxy resins for a number of years. Core/shell particles are generally 10 micrometers or less in size and typically contain a core that is made from one material and which is surrounded by one or more shells made from another material. Typically, either the core or the shell is composed of rubber or a similar polymer. Examples of core/shell toughened epoxy resin systems are described in U.S. Patent Nos. 5,266,610 and 6,063,839. Core/shell particles have also been used in combination with liquid rubber to toughen and strengthen epoxy adhesives.

Thermoplastic materials, such as polyethersulfone and polyetherimde, which have relatively high glass transition temperatures (T_{g}), continue to be attractive toughening agents for use in strengthening, amongst other characteristics, the peel strength of epoxy adhesives. These thermoplastic materials afford excellent toughening of epoxy-based adhesives, even when the adhesives are exposed to high temperatures. Unfortunately, in most cases, the use of such high glass transition thermoplastic particles requires a correspondingly high cure temperature in order to maintain a sufficient gap between the developing matrix glass transition and the cure temperature.

### SUMMARY OF THE INVENTION

In accordance with the present invention, it was discovered that epoxy adhesives, which are toughened with thermoplastics having a relatively high T_{g}, can be cured at relatively low temperatures ( 140°C to 160°C) to produce adhesives having high bond strengths provided that core/shell particles are included as an additive. It was found that the addition of relatively small amounts of core/shell particles provide an expected increase in the bond strength of high T_{g} thermoplastic toughened epoxy adhesives when the adhesive is cured at conventional high temperatures of around 175°C. However, it was also found in accordance with the present invention that substantial and unexpected increases in the bond strength of the high T_{g} thermoplastic toughened epoxy adhesives occurred when the adhesives were cured at low temperatures. This ability to achieve high bond strengths at low cure temperatures for high T_{g} thermoplastic toughened epoxy adhesives provides a significant advantage, which increases the usefulness of such adhesives, especially in situations were high cure temperatures need to be avoided.

The present invention is directed to methods for bonding two surfaces together using a thermoplastic toughened epoxy adhesive. The method involves initially providing the two surfaces that are to be bound together. The adhesive, which is composed of an epoxy component, a thermoplastic component, a core/shell particle component and a curing agent, is applied to one or both of the surfaces. The surfaces are bonded together by heating the adhesive to a temperature of between 140°C and 160°C for a sufficient time to cure the adhesive.

The present invention is also directed to the thermoplastic toughened adhesive that is used in the method for bonding two surfaces together at relatively low temperatures and to the methods for curing the adhesive at such low temperatures.

The present invention provides an improvement upon existing methods for bonding two surfaces together using thermoplastic toughened epoxy adhesives that are composed of an epoxy component, a thermoplastic component and a curing agent. The improvement involves adding core/shell particles to the epoxy adhesive and curing the adhesive at a relatively low temperature of between 140°C and 160°C for a sufficient time to cure the adhesive and while still providing a high-strength bond between the two surfaces.
The present invention is defined by claims 1, 2 to 9 and 10.

The above described and many other features and attendant advantages of the present invention will become better understood by reference to the following detailed description.

### DETAILED DESCRIPTION OF THE INVENTION

The present invention involves modifying existing thermoplastic toughened epoxy adhesives with core/shell particles and subjecting the resulting modified adhesive to a relatively low cure temperature in order to provide a high-strength bond between two surfaces. A high-strength bond is one where the adhesive exhibits a peel strength on the order of about 90 N/25mm and above, or more preferably 100 N/25mm and above, as measured by the standard test identified as EN2243-2. The results of standard peel test EN2243-2 are subject to some experimental error, as are all test procedures. The experimental error for EN2242-2 can be as high as 15-20 N/25mm. The term "about" is intended to cover possible experimental error that may occur and is to be interpreted herein as meaning 90 N/25mm ± 20 N/25mm. The present invention is applicable to any of the thermoplastic toughened epoxy resin systems that are well known in the art. The invention is particularly well suited for those epoxy resins that are toughened with thermoplastic particles that have a relatively high T_{g}. Such particles typically have a T_{g} of above 200°C.

The thermoplastic toughened epoxy adhesives that are used in the method of the present invention for bonding two surfaces together include an epoxy component, a thermoplastic component, a core/shell particle component and a curing agent. If desired, the adhesive may additionally include standard additives, such as flame retardants, diluents, antioxidants, dyes, pigments, inorganic and organic fillers, stabilizers, UV absorbers and plasticizers.

The epoxy component may include one or more types of difunctional or multifunctional epoxy resins that are conventionally used to make epoxy adhesives. Exemplary difunctional epoxies include liquid or solid bisphenol A diglycidyl ether (DGEBA) epoxy resins, bisphenol-F epoxy resins (DGEBF), bisphenol-S epoxy resins as well as phenol novolak type epoxies, cresol novolak type epoxies and resorcinol type epoxies. Exemplary multifunctional epoxies include triglycidyl p-aminophenol epoxy resin, tetraglycidyl diaminodiphenyl methane and epoxy polyphenols. It is preferred that the epoxy component include a combination of solid and liquid DGEBA or DGEBF epoxy resins with one or more multifunctional epoxy resins.

The amount of epoxy resin(s) in the adhesive will typically range from 40 to 90 weight percent. More preferably, the epoxy component will make up from 60 to 80 weight percent of the adhesive. It is preferred that the largest portion of the epoxy component be liquid DGEBA or DGEBF with lesser amounts of solid DGEBA and multifunctional epoxy being present. Typically, the amount of liquid DGEBA or DGEBF in the adhesive will range from 30 to 50 weight percent with amounts in the range of 35 to 45 weight percent being preferred. The amount of solid DGEBA in the adhesive will range from 10 to 30 weight percent with amounts in the range of 15 to 25 weight percent being preferred. The amount of multifunctional epoxy in the adhesive will range from 0 to 20 weight percent with amounts in the range of 5 to 15 weight percent being preferred.

Epoxy resins are available from a wide variety of commercial sources. Exemplary liquid DGEBA epoxy resins are available from Dow Chemical Company (Midland, Michigan) under the tradename DER^{®}. Other exemplary liquid DGEBA epoxy resins are available from Huntsman Advanced Materials (Basel, Switzerland) under the tradename Araldite^{®}. Exemplary liquid DGEBF epoxy resins are available from Hexion Specialty Chemicals (Clayton, England) under the tradename Epikote^{®}, from Huntsman Advanced Materials (Basel, Switzerland) under the tradename Aralidite^{®} and from Dow Chemical Company (Midland, Michigan) as DEN^{®}. Exemplary solid DGEBA epoxy resins are also available from Dow Chemical Company (Midland, Michigan) under the tradename DER^{®} and Huntsman Advanced Materials (Basel, Switzerland) under the tradename Araldite^{®}. Multifunctional epoxy resins are available from Huntsman Advanced Materials (Basel, Switzerland) under the tradenames Araldite^{®} MY-721 and MY-720, which are tetraglycidyl diaminophenyl methane epoxies. Triglycidyl aminophenol epoxies are available under the tradenames Araldite^{®} MY0510, MY0500 and MY0600. Exemplary epoxy polyphenols include: triglycidyl ether of tri(hydroxyphenyl)methane, which is commercially available as Tactix^{®} 42 from Huntsman Advanced Mateials; triglycidyl ether of tri(hydroxyphenyl)ethane, which is commercially available as Epalloy^{®} 9000 from CVC Chemicals; and glycidyl ether of (Phenol)-(3a,4,4,4a-tetrahydro-4,7-methano-1H-indene) polymer, which is available as Tactix^{®} 556 from Huntsman Advanced Chemicals. Other exemplary commercial sources of multifunctional epoxy resins include EPICLON^{®} available from Dainippon Inc. Chemicals, ELM^{®} from Sumitomo and VE^{®} available from Hexicon Specialty Chemicals.

The thermoplastic component may be composed of any of the thermoplastic materials that are conventionally used to toughen epoxy resins. As mentioned above, the preferred thermoplastics are those having a T_{g} of above 200°C. Polyethersulfone (PES) and polyetherimide (PEI) are exemplary thermoplastics that have the requisite high T_{g} . PEI is available commercially from General Electric (Pittsfield, Mass.) under the tradename ULTEM^{®}, and example of which is ULTEM^{®} 1000P. PES, which is a preferred thermoplastic, is available in particulate form from Sumitomo Chemical Co., Ltd (Osaka, Japan) under the tradename Sumikaexcel^{®}, and example of which is Sumikaexcel^{®} 5003P and from Solvay Inc. (Houston, Texas) under the tradename Radel^{®}, an example of which is Radel^{®} A105P.

The thermoplastic component for toughening the epoxy resin may be formed in a variety of ways. The thermoplastic component is preferably formed by initially adding particulate thermoplastic material to the resin. The thermoplastic particles should range in size from less than 1 to no more than 20 microns. Average particles sizes of 1 to 2 microns are particularly preferred. Micronized or densified particles may be used, but micronized particles are preferred. The thermoplastic component that is formed during cure may be in various forms. For example, the thermoplastic may dissolve during cure and not precipitate to form discrete particles in the cured resin. The resulting toughened resin is a single-phase system, i.e. the thermoplastic stays in phase with the resin. Alternatively, the thermoplastic may precipitate to form particles (two-phase system). The thermoplastic may also precipitate as a co-continuous blend with the epoxy (two-phase system). An even further possible form for the thermoplastic component is one where the thermoplastic precipitates such that the system phase inverts thermoplastic with epoxy particles. The result is an inverted two-phase system. The present invention is applicable to all of the above forms of thermoplastic components, including combinations thereof. The thermoplastic is preferably in the form of a two-phase system in which the thermoplastic has precipitated. However, the other forms are suitable and may be achieved depending upon the particular concentration of thermoplastic component that is used.

The amount of the thermoplastic component that is used to toughen the epoxy resin will typically range from 1 to 35 weight percent with 15 to 30 weight percent being preferred and about 25 weight percent being particularly preferred. In general, the amount of thermoplastic particles generated during cure to toughen a particular resin will be determined based on a number of factors including the particular epoxy resins used, the particular thermoplastic, the desired viscosity of adhesive prior to curing and the desired peel strength. An altenative to 5003P is available from Solvay (Northwich, UK).

The curing agent can be any suitable agent for curing epoxy adhesives. It is preferred that the curing agent be an amine curative agent. Dicyandiamide is the preferred curing agent. Other exemplary amine curing agents include 3,3-diaminodiphenylsulfone (3,3-DDS), 4,4'-diaminodiphenylsufone (4.4'-DDS), Bisphenol S and the range of aromatic curatives, such as 4,4'-methylenebis(2-isopropyl-6-methylaniline) (MMIPA), 4,4'-methylenebis(2-ethyl-6-methylaniline (MDEA), 4,4'-methylenebis(2,6-diethyl-3-chloroaniline (MCDEA) which are available from Lonza (Basel, Switzerland) under the trandename Lonzacure^{®}. The amount of curing agent can be varied depends upon the particular curing agent and the blend of epoxy resins. For dicyandiamide and related curing agents, it is preferred that the amount of curing agent be in the range of 2 to 8 weight percent of the adhesive with about 5 weight percent being preferred.

The core/shell particle component may be any of the core/shell particles where a soft core is surrounded by a hard shell. Preferred core/shell particles are those having an acrylic rubber or butadiene-acrylonitrile rubber core and a polyacrylate shell. Core/shell particles having a hard core surrounded by a soft shell may also be used, if desired. Core/shell particles are described in U.S. Pat. Nos. 5,804,655; 5,266,610; and 6,063,839.

Core/shell particles having rubber cores and polyacrylate shells are available commercially from Kaneka Texas Corporation (Houston, Texas) under the tradenames Kane Ace^{®} MX. The core/shell particles range in size from 80 to 100 nm and are supplied as a 25 weight percent suspension of particles in an epoxy resin. It is preferred, but not required, that the core/shell particles be added to the adhesive mixture as a suspension of particles in a suitable epoxy resin. Kane Ace^{®} MX411 is a 25 weight percent suspension of core/shell particles in MY721 epoxy resin and is a preferred ingredient for the adhesive. Kane Ace^{®} MX120 is a 25 weight percent suspension of the same core/shell particles in DER^{®} 331 resin and is also a suitable source of core/shell particles. Other suitable core/shell suspensions include Kane Ace^{®} MX130 (bis F resin), MX136 (bis F resin), MX210 (novolac resin), MX451 (TGAP -MY0510 resin). Core/shell particles are also available from a number of other commercial sources including Rohm and Haas (Paris, France), which supplies core/shell particles under the tradename PARALOID EXL^{®}. The average size of the PARALOID EXL^{®} core/shell particles range from 100 to 600 nm.

It is preferred that from 1 to 10 weight percent of MX411 (or a similar suspension containing 25 weight percent of core/shell particles suspended in epoxy resin) be included in the adhesive. More preferred is from 2 to 6 weight percent of the core/shell suspension with about 4 weight percent being particularly preferred. The use of the preceding amounts of particle suspensions produce adhesives having from 0.25 weight percent to 2.5 weight percent core/shell particles or more preferably from 0.5 to 1.5 weight percent core/shell particles and most preferably about 1.0 weight percent of core/shell particles. Suspensions that contain 25 weight percent core/shell particles in epoxy resin are preferred because they provide a convenient way to add the needed amounts of core/shell particles to the adhesive mixture. However, suspensions of differing amounts of core/shell particles in suitable epoxy resins may be used provided that the amount of core/shell particles added to the adhesive falls within the suggested ranges set forth above. Although it is not preferred, the core/shell particles may be added directly to the adhesive mixture provided that suitable equipment is used to obtain a satisfactory dispersion with no large agglomerates.

The thermoplastic toughened epoxy adhesive of the present invention is prepared in the same manner as known methods for preparing such adhesives. The various components, not including the curing agent, are mixed together at a temperature that is sufficient to dissolve the PES. Typical mixing temperatures are around 130°-150°C. The resulting mixture is then cooled to temperatures on the order of 80°C prior to addition of the curing agent. The resulting adhesive is applied to the surfaces to be bonded in the same manner as any thermoplastic toughened epoxy adhesive. The adhesive is applied to one or both of the surfaces to form a film thereon. In a common method, the adhesive is formed into a film that is sandwiched between the surfaces to be bonded. The amount of adhesive applied to the surface will vary depending upon a number of factors including the desired peel strength, the materials being bonded together and the particular adhesive that is being used. In general, the amount of adhesive located between the surfaces being bonded together will range from 75 to 500 gsm. Adhesive coating levels of between 190 gsm to 300 gsm are preferred.

As is well known, the surfaces are bonded together by heating the adhesive to an appropriate curing temperature. The adhesive is kept at the curing temperature for a sufficient time to cure the adhesive and provide a bond having the desired peel strength. For conventional non-accelerated thermoplastic toughened adhesives, the curing temperature is normally a minimum of 160°C. A standard curing temperature is about 175°C. The usual cure time is normally on the order of 1 hour. Curing at lower temperatures has been avoided due to significant drops in the peel strength of the resulting bond.

In accordance with the present invention, the cure temperature is reduced below normal levels to between 140°C and 160°C and preferably between 145°C and 155°C. The cure temperature is maintained for a sufficient time to cure the adhesive, which typically takes on the order of 3 to 5 hours with a 4-hour cure being preferred. It was discovered that the inclusion of core/shell particles, as described above, provides toughened adhesives that unexpectedly have peel strengths of at least about 90 N/25mm when only a small amount (0.5 weight percent) of particles is added. The peel strengths of the modified thermoplastic toughened epoxy resins increases to well over a bout 100 N/25mm when a slightly greater amount (1.9 weight percent) of core/shell particles is included.

It should be noted, as mentioned previously, that the inclusion of core/shell particles in thermoplastic toughened epoxy adhesives also provides an increase in the peel strength of the adhesive when it is cured at normal cure temperatures (160°C and above). However, it was discovered that using a low temperature cure cycle in accordance with the present invention provides an increase in the peel strength of the core/shell loaded adhesives that is much larger and unexpected in comparison to the increase observed using a normal high temperature cure cycle at low core/shell particle loadings (approximately 1 weight percent).

The ability to provide high peel strengths using a relatively low temperature cure cycle makes the present invention well suited for use in situations where high cure temperatures are not desired or not possible. For example, in large scale bonding operations, the amount of energy saved by reducing the curing temperature to below 160°C can be quite substantial. In addition, there are many situations where the materials being bonded together are sensitive to temperatures above 160°C or where it is not possible to heat the materials being bonded to temperatures above. Also, there are many situations where the tooling used to make the bonded part cannot be used at temperatures above 160°C. A principal advantage provided by the present invention is that the low peel strength that occurs as a result of curing at temperatures well below normal cure temperatures can be compensated for (to some extent) by minimally altering the formulation to include a relatively low loading of core/shell particles.

Examples of practice are as follows:

### EXAMPLE 1

A thermoplastic toughened epoxy adhesive was prepared by mixing together 40 weight percent Rutapox^{®} 0158 liquid DGEBF resin (also known as Epikote^{®} 158), 20 weight percent Epikote^{®} 1001 solid DGEBA resin, 10 weight percent MY721 multifunction epoxy resin, 25 weight percent PES and 5 weight percent dicyandiamide. To establish a baseline, this adhesive was filmed at 210 ± 5 gsm on F0826 carrier, available from Heathcoat (Tiverton, UK) and then cured between chrome-sulphuric acid etched aluminum 2024-T3 plates (one at 1.6 mm and another at 0.5 mm) for 4 hours at 150°C. The resulting panels were cut into 25 mm strips and tested for peel strength according to EN 2243-2. The peel strength for the cured adhesive, without core/shell particles was 53 N/25mm.

The above adhesive was modified in accordance with the present invention by reducing the amount of solid DGEBA resin to 19 weight percent and the amount of MY721 resin to 9 weight percent. 2 weight percent of Kaneka Kane Ace® MX 411 (core/shell particles dispersed in MY721 resin) was added to the modified mixture to provide an effective loading of core/shell particles equal to 0.5 weight percent. This adhesive was cured and tested in the same manner as the baseline adhesive and found to have a peel strength of about 90 N/25mm.

### EXAMPLE 2

A modified adhesive in accordance with the present invention was prepared in the same manner as Example 1 except that the amount of solid DGEBA resin was left at 20 weight percent and the amount of MY721 resin was reduced to 7 weight percent. The amount of Kaneka Kane Ace® MX 411 was increase to 3 weight percent to provide an effective loading of core/shell particles equal to 0.75 weight percent. The adhesive was cured and tested in the same manner as the baseline adhesive and found to have a peel strength of about 102 N/25mm.

### EXAMPLE 3

A modified adhesive in accordance with the present invention was prepared in the same manner as Example 1 except that the amount of solid DGEBA resin was reduced to 19 weight percent and the amount of MY721 resin was reduced to 7 weight percent. The amount of Kaneka Kane Ace® MX 411 was increased to 4 weight percent to provide an effective loading of core/shell particles equal to 1.0 weight percent. The adhesive was cured and tested in the same manner as the baseline adhesive and found to have a peel strength of about 121 N/25mm.

### EXAMPLE 4

A thermoplastic toughened epoxy adhesive was prepared by mixing together 40 weight percent Rutapox^{®} 0158 liquid DGEBF resin, 20 weight percent Epikote^{®} 1001 solid DGEBA resin, 10 weight percent MY9512H multifunction epoxy resin, 25 weight percent PES and 5 weight percent dicyandiamide. To establish a baseline, this adhesive was filmed at 210 ± 5 gsm onto a Heatcoat^{®} F0826 carrier and then cured between chrome-sulphuric acid etched aluminum 2024-T3 plates (one at 1.6 mm and another at 0.5 mm) for 4 hours at 150°C. The resulting panels were cut into 25 mm strips and tested for peel strength according to EN 2243-2. The peel strength for the cured adhesive, without core/shell particles was 98 N/25mm.

The above adhesive was modified in accordance with the present invention by reducing the amount of solid DGEBA resin to 19 weight percent and the amount of MY9512H resin to 7 weight percent. 4 weight percent of Kaneka Kane Ace® MX 411 (core/shell particles dispersed in MY721 resin) was added to the modified mixture to provide an effective loading of core/shell particles equal to 1.0 weight percent. This adhesive was cured and tested in the same manner as the baseline adhesive and found to have a peel strength of about 130 N/25mm.

### COMPARATIVE EXAMPLE 1

A thermoplastic toughened epoxy adhesive was prepared in the same manner as Example 1 by mixing together 40 weight percent liquid Rutapox^{®} 0158 DGEBF resin, 20 weight percent Epikote^{®} 1001 solid DGEBA resin, 10 weight percent MY721 multifunction epoxy resin, 25 weight percent PES and 5 weight percent dicyandiamide. To establish a baseline, this adhesive was filmed at 210 ± 5 gsm onto a Heathcoat^{®} F0826 carrier and then cured between chrome-sulphuric acid etched aluminum 2024-T3 plates (one at 1.6 mm and another at 0.5 mm) for 1 hour at 175°C. The resulting panels were cut into 25 mm strips and tested for peel strength according to EN 2243-2. The peel strength for the cured adhesive, without core/shell particles was 150 N/25mm.

A modified toughened epoxy adhesive was also prepared in the same manner as Example 3 (i.e. effective core/shell particle loading of 1.0 weight percent). The modified adhesive was cured at high temperature (175°C) and tested as set forth above. The resulting peel strength increased to 201 N/25mm.

### COMPARATIVE EXAMPLE 2

A thermoplastic toughened epoxy adhesive was prepared in the same manner as Example 4 by mixing together 40 weight percent Rutapox^{®} 0158 liquid DGEBF resin, 20 weight percent Epikote^{®} 1001 solid DGEBA resin, 10 weight percent MY9512H multifunction epoxy resin, 25 weight percent PES and 5 weight percent dicyandiamide. To establish a baseline, this adhesive was filmed at 210 ± 5 gsm onto a Heathcoat^{®} F0826 carrier and then cured between chrome-sulphuric acid etched aluminum 2024-T3 plates (one at 1.6 mm and another at 0.5 mm) for 1 hour at 175°C. The resulting panels were cut into 25 mm strips and tested for peel strength according to EN 2243-2. The peel strength for the cured adhesive, without core/shell particles was 172 N/25mm.

A modified toughened epoxy adhesive was prepared in the same manner as Example 4 (i.e. effective core/shell particle loading of 1.0 weight percent). The modified adhesive was cured at high temperature (175°C) and tested as set forth above. The resulting peel strength increased to 195 N/25mm.

As is apparent from the above examples, the present invention provides an unexpected increase in adhesive peel strength, for such a small modification of the adhesive formulation, while at the same time providing the ability to cure the adhesive advantageously at a relatively low temperature.

## Claims

1. A method for bonding two surfaces together using a thermoplastic toughened epoxy adhesive, said method comprising the steps of:
providing first and second surfaces;
providing a thermoplastic toughened epoxy adhesive, said adhesive comprising an epoxy component, a thermoplastic component, a core/shell particle component and a curing agent;
applying said thermoplastic toughened epoxy adhesive to said first and second surfaces;
bonding said first and second surfaces together, said bonding comprising the step of heating said thermoplastic toughened epoxy adhesive to a temperature of between 140°C and 160°C for a sufficient time to cure said thermoplastic toughened epoxy adhesive.

2. A method for bonding two surfaces together using a thermoplastic toughened epoxy adhesive according to claim 1 wherein said thermoplastic toughened epoxy adhesive is heated to a temperature of between 145°C and 155°C during the bonding step.

3. A method for bonding two surfaces together using a thermoplastic toughened epoxy adhesive according to claim 1 wherein said epoxy component comprises liquid diglycidyl ether of bisphenol A or bisphenol F and bisphenol A diglycidyl ether solid epoxy resin.

4. A method for bonding two surfaces together using a thermoplastic toughened epoxy adhesive according to claim 1 wherein said epoxy component comprises a multifunctional epoxy.

5. A method for bonding two surfaces together using a thermoplastic toughened epoxy adhesive according to claim 1 wherein said thermoplastic component consists essentially of polyethersulfone and/or polyetherimide.

6. A method for bonding two surfaces together using a thermoplastic toughened epoxy adhesive according to claim 1 wherein said core/shell particle component comprises particles having an acrylic rubber or butadiene-acrylontrile rubber core and a polyacrylate shell.

7. A method for bonding two surfaces together using a thermoplastic toughened epoxy adhesive according to claim 3 wherein said epoxy component additionally comprises a multifunctional epoxy.

8. A method for bonding two surfaces together using a thermoplastic toughened epoxy adhesive according to claim 7 wherein said thermoplastic component comprises particles consisting essentially of polyethersulfone and said core/shell component comprises particles having an acrylic rubber or butadiene-acrylonitrile rubber core and a polyacrylate shell.

9. A method for bonding two surfaces together using a thermoplastic toughened epoxy adhesive according to claim 1 wherein the said two surfaces that are bonded together have a peel strength of at least 90 N/25mm.

10. A thermoplastic toughened epoxy adhesive for use in a method for bonding two surfaces according to claim 1 wherein said adhesive comprises an epoxy component, a thermoplastic component, a core/shell particle component and a curing agent

## Patentansprüche

1. Verfahren zum Verkleben zweier Oberflächen miteinander unter Verwendung eines thermoplastischen zäh gemachten Epoxidklebstoffs, wobei das Verfahren die folgenden Schritte umfaßt:
- Bereitstellen erster und zweiter Oberflächen,
- Bereitstellen eines thermoplastischen zäh gemachten Epoxidklebstoffs, wobei der Klebstoff einen Epoxidbestandteil, einen thermoplastischen Bestandteil und einen Kern-/Hüllenpartikelbestandteil und ein Härtungsmittel umfaßt,
- Auftragen des thermoplastischen zäh gemachten Epoxidklebstoffs auf die ersten und zweiten Oberflächen,
- Verkleben der ersten und zweiten Oberflächen miteinander, wobei das Verkleben den Schritt des Erhitzens des thermoplastischen zäh gemachten Epoxidklebstoffs auf eine Temperatur zwischen 140 °C und 160 °C für ausreichend Zeit umfaßt, um den thermoplastischen zäh gemachten Epoxidklebstoff zu härten.

2. Verfahren zum Verkleben zweier Oberflächen miteinander unter Verwendung eines thermoplastischen zäh gemachten Epoxidklebstoffs nach Anspruch 1, wobei der thermoplastische zäh gemachte Epoxidklebstoff während des Verklebungsschrittes auf eine Temperatur zwischen 145 °C und 155 °C erhitzt wird.

3. Verfahren zum Verkleben zweier Oberflächen miteinander unter Verwendung eines thermoplastischen zäh gemachten Epoxidklebstoffs nach Anspruch 1, wobei der Epoxidbestandteil flüssigen Lipid-Diglycidyl-Ether von Bisphenol A oder Bisphenol F und festes Bisphenol-A-Diglycidyl-Ether-Epoxidharz umfaßt.

4. Verfahren zum Verkleben zweier Oberflächen miteinander unter Verwendung eines thermoplastischen zäh gemachten Epoxidklebstoffs nach Anspruch 1, wobei der Epoxidbestandteil ein multifunktionelles Epoxid umfaßt.

5. Verfahren zum Verkleben zweier Oberflächen miteinander unter Verwendung eines thermoplastischen zäh gemachten Epoxidklebstoffs nach Anspruch 1, wobei der thermoplastische Bestandteil im wesentlichen aus Polyethersulfon und/oder Polyetherimid besteht.

6. Verfahren zum Verkleben zweier Oberflächen miteinander unter Verwendung eines thermoplastischen zäh gemachten Epoxidklebstoffs nach Anspruch 1, wobei der Kern-/Hüllenpartikelbestandteil Partikel mit einem Acrylgummikern oder Butadien-Acrylonitril-Gummikern und eine Polyacrylathülle umfaßt.

7. Verfahren zum Verkleben zweier Oberflächen miteinander unter Verwendung eines thermoplastischen zäh gemachten Epoxidklebstoffs nach Anspruch 3, wobei der Epoxidbestandteil zusätzlich ein multifunktionelles Epoxid umfaßt.

8. Verfahren zum Verkleben zweier Oberflächen miteinander unter Verwendung eines thermoplastischen zäh gemachten Epoxidklebstoffs nach Anspruch 7, wobei der thermoplastische Bestandteil Partikel umfaßt, die im wesentlichen aus Polyethersulfon bestehen, und der Kern-/Hüllenpartikelbestandteil Partikel mit einem Acrylgummikern oder Butadien-Acrylonitril-Gummikern und eine Polyacrylathülle umfaßt.

9. Verfahren zum Verkleben zweier Oberflächen miteinander unter Verwendung eines thermoplastischen zäh gemachten Epoxidklebstoffs nach Anspruch 1, wobei die beiden Oberflächen, die mit einander verklebt werden, eine Abziehfestigkeit von wenigstens 90 N/25 mm haben.

10. Thermoplastischer zäh gemachten Epoxidklebstoff zur Verwendung in einem Verfahren zum Verkleben zweier Oberflächen nach Anspruch 1, wobei der Klebstoff einen Epoxidbestandteil, einen thermoplastischen Bestandteil, einen Kern-/Hüllenpartikelbestandteil und ein Härtungsmittel umfaßt.

## Revendications

1. Procédé pour lier deux surfaces entre elles au moyen d'un adhésif époxyde renforcé thermoplastique, ledit procédé comprenant les étapes de :
fournir des première et seconde surfaces ;
fournir un adhésif époxyde renforcé thermoplastique, ledit adhésif comprenant un composant époxyde, un composant thermoplastique, un composant à particules noyau/enveloppe et un agent de durcissement ;
appliquer ledit adhésif époxyde renforcé thermoplastique auxdites première et seconde surfaces ;
lier lesdites première et seconde surfaces entre elles, ladite liaison comprenant l'étape de chauffage dudit adhésif époxyde renforcé thermoplastique à une température entre 140°C et 160°C pendant une durée suffisante pour durcir ledit adhésif époxyde renforcé thermoplastique.

2. Procédé pour lier deux surfaces entre elles au moyen d'un adhésif époxyde renforcé thermoplastique selon la revendication 1 où ledit adhésif époxyde renforcé thermoplastique est chauffé à une température entre 145°C et 155°C pendant l'étape de liaison.

3. Procédé pour lier deux surfaces entre elles au moyen d'un adhésif époxyde renforcé thermoplastique selon la revendication 1 où ledit composant époxyde comprend une résine époxyde de diglycidyléther de bisphénol A ou de bisphénol F liquide et une résine époxyde de diglycidyléther de bisphénol A solide.

4. Procédé pour lier deux surfaces entre elles au moyen d'un adhésif époxyde renforcé thermoplastique selon la revendication 1 où ledit composant époxyde comprend un époxyde multifonctionnel.

5. Procédé pour lier deux surfaces entre elles au moyen d'un adhésif époxyde renforcé thermoplastique selon la revendication 1 où ledit composant thermoplastique consiste essentiellement en polyéthersulfone et/ou polyétherimide.

6. Procédé pour lier deux surfaces entre elles au moyen d'un adhésif époxyde renforcé thermoplastique selon la revendication 1 où ledit composant à particules noyau/enveloppe comprend des particules ayant un noyau de caoutchouc acrylique ou de caoutchouc butadiène-acrylonitrile et une enveloppe de polyacrylate.

7. Procédé pour lier deux surfaces entre elles au moyen d'un adhésif époxyde renforcé thermoplastique selon la revendication 3 où ledit composant époxyde comprend en outre un époxyde multifonctionnel.

8. Procédé pour lier deux surfaces entre elles au moyen d'un adhésif époxyde renforcé thermoplastique selon la revendication 7 où ledit composant thermoplastique comprend des particules consistant essentiellement en polyéthersulfone et ledit composant noyau/enveloppe comprend des particules ayant un noyau de caoutchouc acrylique ou de caoutchouc butadiène-acrylonitrile et une enveloppe de polyacrylate.

9. Procédé pour lier deux surfaces entre elles au moyen d'un adhésif époxyde renforcé thermoplastique selon la revendication 1 où lesdites deux surfaces qui sont liées entre elles ont une force d'arrachement d'au moins 90 N/25 mm.

10. Adhésif époxyde renforcé thermoplastique destiné à être utilisé dans un procédé pour lier deux surfaces selon la revendication 1 où ledit adhésif comprend un composant époxyde, un composant thermoplastique, un composant à particules noyau/enveloppe et un agent de durcissement.
